# EUROPÄISCHE PATENTSCHRIFT

(11) **EP 0 598 242 B1**
(45) Veröffentlichungstag und Bekanntmachung des Hinweises auf die Patenterteilung: **20.12.1995**
(21) Anmeldenummer: 93117084.9
(22) Anmeldetag: 21.10.1993
(51) Int. Cl.: B21D 28/06, F16D 13/64

(54) **Mitnehmerscheibe für eine Kupplungsscheibe einer Kraftfahrzeug-Reibungskupplung und Verfahren zu ihrer Herstellung**
Driven plate for a clutch disk of a vehicle friction clutch and its method of manufacture
Disque mené pour un disque d'embrayage d'un embrayage à friction de véhicule automobile et sa méthode de fabrication

(30) Priorität: 22.10.1992 DE 4235587
(43) Veröffentlichungstag der Anmeldung: 25.05.1994
(73) Patentinhaber: FICHTEL & SACHS AG, D-97424 Schweinfurt (DE)
(72) Erfinder: Schraut, Alfred, D-97534 Waigolshausen (DE)
(74) Vertreter: Liska, Horst, Dr.-Ing.

(56) Entgegenhaltungen:
- DE-A- 3 436 583
- GB-A- 635 041
- PATENT ABSTRACTS OF JAPAN vol. 11, no. 125 (M-582)18. April 1987 & JP-A-61 266 195 (KOMATSU) 25. November 1986

## Beschreibung

Die Erfindung betrifft eine Mitnehmerscheibe für eine torsionsgefederte Kupplungsscheibe einer Kraftfahrzeug-Reibungskupplung sowie ein Verfahren zur Herstellung einer solchen Mitnehmerscheibe.

Herkömmliche Kupplungsscheiben von Kraftfahrzeug-Reibungskupplungen haben üblicherweise eine zur Kupplungsdrehachse zentrische, mit einer Getriebeeingangswelle drehfest verbindbare Nabe, an der über einen begrenzten Relativdrehwinkel drehbar, eine die Reibbeläge der Kupplungsscheibe tragende Mitnehmerscheibe gelagert ist. Die Mitnehmerscheibe ist über Federn einer Torsionsfederung drehelastisch mit der Nabe gekuppelt. Solche eine Torsionsfederung ermöglichenden Torsionsschwingungsdämpfer sind gleichfalls bekannt und umfassen zumeist mehrere gleichachsig nebeneinander angeordnete Scheiben, die in axial zueinander ausgerichteten Fenstern die Federn der Torsionsfederung aufnehmen. Bei herkömmlichen Konstruktionen von Torsionsschwingungsdämpfern sind die Federn in Fenstern von zwei zu einer Einheit miteinander verbundenen Scheibenteilen einerseits und einem zwischen diesen beiden äußeren Scheibenteilen angeordneten, relativ dazu verdrehbaren, mittleren Scheibenteil angeordnet. Die Mitnehmerscheibe bildet hierbei eines der beiden äußeren Scheibenteile oder das mittlere Scheibenteil.

Aus GB-A-63 50 41 ist ein Reibbelagträger bekannt, welche aus einem Paar ringförmiger Belagträgerscheiben aus Federstahl gebildet wird, welche axial nebeneinander angeordnet sind, an den voneinander weg weisenden Seiten Reibbeläge tragen und durch zwischen den beiden Belagträgerscheiben angeordnete Tellerfedern voneinander abgespreizt werden. Die beiden Belagträgerscheiben werden aus einer Vielzahl bogenförmiger, in Umfangsrichtung gegeneinander versetzter Segmente gebildet, welche entlang ihres Innenrands mittels Nieten untereinander und mit einem Trägerteil verbunden sind.

Aus der DE-A-3 436 583 (GB-A-2 165 323) (nächster Stand der Technik) ist eine Mitnehmerscheibe für eine torsionsgefederte Kupplungsscheibe bekannt, die einen um die Drehachse herum angeordneten, im wesentlichen ringscheibenförmigen Belagträger zur Anbringung der Reibbeläge und ein zur Drehachse zentrisches, im wesentlichen ringscheibenförmiges Verstärkungsteil mit mehreren in Umfangsrichtung verteilten Fenstern zur Aufnahme der Federn der Torsionsfederung aufweist. Das Verstärkungsteil hat radial außerhalb des Bereichs der Fenster einen Zentrierrand mit Kreiskontur an dem der Belagträger mit einem der Kreiskontur des Zentrierrands im wesentlichen folgenden, radial inneren Rand anliegt. Der Belagträger ist entlang dieses Anlagerands an den Verstärkungsteil eingeschweißt. Eine solche Konstruktion ist durch die Möglichkeit, den Belagträger und das Verstärkungsteil separat herzustellen und den jeweiligen Anforderungen entsprechend auszubilden, sehr interessant. Auch genügen die Betriebseigenschaften einer solchen Mitnehmerscheibe in aller Regeln den Anforderungen.

Es ist Aufgabe der Erfindung, eine Mitnehmerscheibe der vorstehenden Art zu schaffen, die einfacher und billiger als bisher hergestellt werden kann. Es ist ferner eine Aufgabe der Erfindung ein Herstellungsverfahren für eine solche Mitnehmerscheibe anzugeben.

Bei der Lösung dieser Aufgabe geht die Erfindung aus von einer Mitnehmerscheibe für eine torsionsgefederte Kupplungscheibe einer Kraftfahrzeug-Reibungskupplung, umfassend:
einen um eine Drehachse herum angeordneten, im wesentlichen ringscheibenförmigen Belagträger zur Anbringung von Reibbelägen und
ein zur Drehachse zentrisches, im wesentlichen ringscheibenförmiges Verstärkungsteil mit mehreren in Umfangsrichtung verteilten Fenstern zur Aufnahme von Federn einer Torsionsfederung,
wobei das Verstärkungsteil radial außerhalb des Bereichs der Fenstern einen Zentrierrand mit Kreiskontur hat und der Belagträger einen der Kreiskontur des Zentrierrands im wesentlichen folgenden, radial inneren Rand aufweist, mit dem er an dem Zentrierrand anliegt und entlang dem er an dem Verstärkungsteil angeschweißt ist. Bei einer solchen Mitnehmerscheibe ist erfindungsgemäß vorgesehen, daß der Belagträger aus mehreren, als gesonderte Blechstanzteile ausgebildeten Segmenten zusammengesetzt ist, von denen sich jedes in Umfangsrichtung lediglich über einen Teil des Zentrierrands erstreckt und einen zumindest angenähert dem Radius des Zentrierrands entsprechend bogenförmig konkav gekrümmten Anlagerand für die Zentrierung des Verstärkungsteils aufweist, und daß die Segmente in Umfangsrichtung hintereinander angeordnet, jeweils für sich an dem Zentrierrand anliegen und entlang diesem mit dem Verstärkungsteil verschweißt sind.

Bei einer solchen Mitnehmerscheibe kann der Belagträger mit minimalem Stanzabfall hergestellt werden. Während bei der aus DE-A-34 36 583 bekannten Mitnehmerscheibe der Belagträger ein vergleichsweise großes einteiliges Bauteil ist, das nur mit vergleichsweise großem Abfall, z. B. aus seinem radial inneren Bereich hergestellt werden kann, können die Segmente der erfindungsgemäßen Mitnehmerscheibe mit erheblich weniger Materialabfall z. B. aus einem entsprechend breiten Blechband hergestellt werden. Da die einzelnen Segmente mit ihrem konkaven, inneren Anlagerand jeweils für sich am Zentrierrand des Verstärkungsteils zentriert werden können, können die Herstellungstoleranzen zumindest im Bereich dieses inneren Anlagerands erheblich größer gewählt werden als bei der bekannten Mitnehmerscheibe. Da die Segmente lediglich in einem Teilbereich des Gesamtumfangs des Zentrierands an diesem anliegen, so treten keine größeren Schwankungen eines zwischen diesen Rändern eventuell verbleibenden Spalts auf, so daß sich trotz größerer Toleranzen bei der nachfolgenden Verschweißung keine Probleme ergeben.

Das erfindungsgemäße Verfahren zur Herstellung einer solchen Mitnehmerscheibe ist durch folgende Verfahrensschritte gekennzeichnet:
a) Stanzen voneinander gesonderter, durch Aneinanderreihen zu dem Belagträger ergänzbarer Segmente aus Blech, wobei jedes Segment einen zumindest angenähert dem Radius des Zentrierrands entsprechend bogenförmig konkav gekrümmten Anlagerand für die Zentrierung am Zentrierrand des Verstärkungsteils aufweist,
b) Fixieren des Verstärkungsteils und einer für die Ergänzung zum Belagträger erforderlichen Anzahl an Segmenten in einer Montagelehre in der Weise, daß ein jedes der Segmente mit seinem bogenförmigen Anlagerand am Zentrierrand anliegt und
c) Verschweißen der fixierten Segmente entlang ihrer Anlageränder mit dem Verstärkungsteil im Bereich des Zentrierrands.

Die Verwendung der Montagelehre, in der die Segmente und das Verstärkungsteil vor dem Verschweißen fixiert werden, stellt sicher, daß die Schwankungen des zwischen den beiden Rändern toleranzbedingt verbleibenden Spalts möglichst klein bleibt. Die gegebenenfalls relativ groben Toleranzen der den Anlagerand bildenden Innenkontur der Segmente haben deshalb kaum Auswirkungen auf die Qualität der Mitnehmerscheibe.

Für die Befestigung der Reibbeläge oder einer ihrerseits die Reibbeläge tragenden Belagfederung an dem Belagträger ist dieser herkömmlich mit Öffnungen, wie z. B. Nietlöchern oder dgl. versehen. Diese Öffnungen können bereits anfänglich beim Ausstanzen der Segmente miteingestanzt werden. Es hat sich aber als sehr vorteilhaft herausgestellt, wenn zumindest die für die Befestigung der Reibbeläge vorgesehenen Öffnungen erst nach dem die Segmente mit dem Verstärkungsteil verbindenden Schweißvorgang eingearbeitet, beispielsweise gestanzt oder gebohrt werden. Dadurch ist sichergestellt, daß selbst bei größeren Toleranzen im Bereich des Anlagerands des Segments diese Toleranzen keine Auswirkung auf die exakte zentrische Befestigung der Reibbeläge haben. Es versteht sich, daß nicht nur diese der Befestigung dienenden Öffnungen, sondern auch weitere Öffnungen, die beispielsweise der Gewichtsreduzierung dienen, zur Vermeidung von Unwuchten gleichfalls erst nach dem Schweißvorgang in die Segmente eingearbeitet werden. Die vorstehend erläuterte bevorzugte Variante des Herstellungsverfahrens ermöglicht es, daß die Toleranzen der Abstände der Öffnungen von der Drehachse kleiner bemessen werden können, als die Toleranzen mit der der bogenförmige Anlagerand jedes Segments dem Radius des Zentrierrands des Verstärkungsteils folgt. Dies gilt entsprechend auch für Öffnungen, die zur Gewichstreduzierung vorgesehen sind.

Jedes Segment ist zweckmäßigerweise in Umfangsrichtung durch radial verlaufende, zumindest über einen Teil der radialen Abmessungen des Segments sich erstreckende Ränder begrenzt, deren Abstand in Umfangsrichtung so gewählt ist, daß sich die den Belagträger bildende Segmente zu einer in Umfangsrichtung geschlossenen Ringscheibe ergänzen, um so den Drehmomentübertragungsquerschnitt möglichst groß zu machen. In einer bevorzugten Ausgestaltung sind die Segmente entlang benachbarter und in Umfangsrichtung im wesentlichen ohne Spalt aneinander angrenzender radialer Rändern miteinander verschweißt. Auf diese Weise erhält die gesamte Mitnehmerscheibe eine größere Formstabilität. Die miteinander verschweißten radialen Ränder können über die gesamte radiale Erstreckung des Belagträgers verlaufen, erstrecken sich aber ausgehend von dem bogenförmigen Anlagerand vorzugsweise nur über einen Teil der gesamten radialen Erstreckung.

Um die Stanzherstellung der Segmente zu erleichtern, haben sämtliche den Belagträger bildende Segmente bevorzugt gleiche Außenkontur. Darüberhinaus sind die Segmente zweckmäßigerweise in Umfangsrichtung spiegelsymmetrisch um Montagefehler auszuschließen.

Im folgenden wird die Erfindung anhand eines Ausführungsbeispiels näher erläutert.
Hierbei zeigt:
- Figur 1: eine Teilansicht einer Mitnehmerscheibe für eine torsionsgefederte Kupplungsscheibe einer Kraftfahrzeug-Reibungskupplung;
- Figur 2: eine Schnittansicht der Mitnehmerscheibe, gesehen entlang einer Linie II-II in Figur 1 und
- Figur 3: eine Seitenansicht eines Segments des Belagträgers vor der Montage.

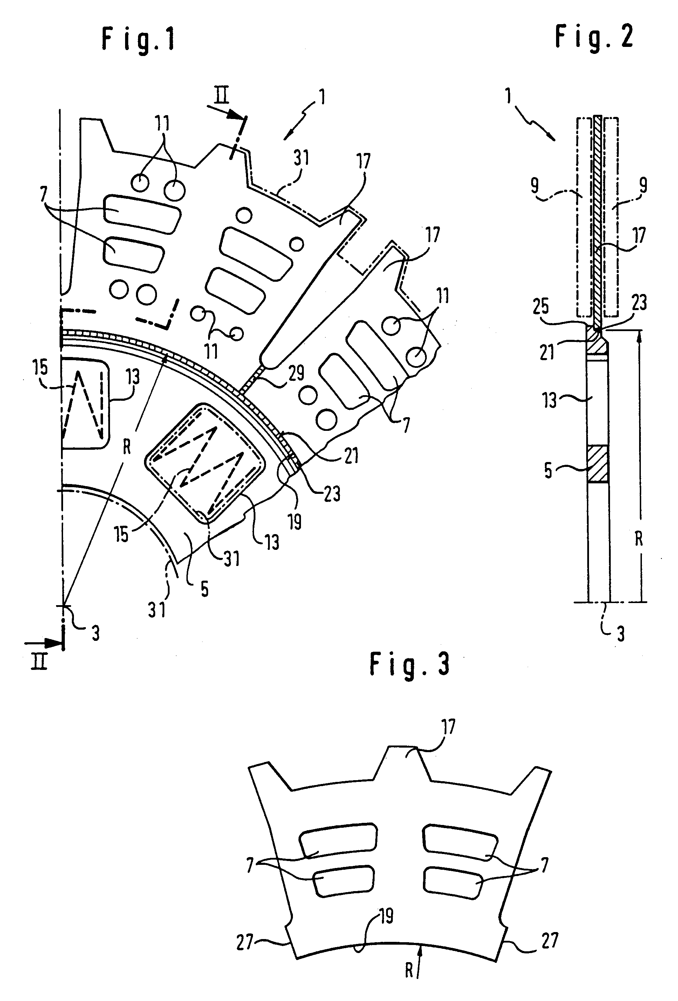

Die in den Figuren 1 und 2 in Teilansicht dargestellte Mitnehmerscheibe ist Teil einer torsionsgefederten Kupplungsscheibe einer Kraftfahrzeug-Reibungskupplung, die im übrigen herkömmlich aufgebaut sein kann. Die Mitnehmerscheibe umfaßt einen allgemein mit 1 bezeichneten, ringscheibenförmigen Belagträger, der ein zu einer Drehachse 3 der Kupplungsscheibe zentrisches, gleichfalls ringscheibenförmiges Verstärkungsteil 5 feststehend umschließt. An dem Belagträger 1, der zur Gewichtsreduzierung mit einer Vielzahl Öffnungen 7 versehen ist, sind axial beiderseits bei 9 angedeutete, ringscheibenförmige Reibbeläge direkt oder über eine nicht näher dargestellte Belagfederung befestigt, beispielsweise angenietet. Entsprechende der Befestigung der Reibbeläge dienende Löcher bzw. Öffnungen des Belagträgers 1 sind bei 11 in Figur 1 erkennbar. Das Verstärkungsteil 5 enthält mehrere in Umfangsrichtung verteilte Fenster 13 zur Aufnahme von bei 15 angedeuteten Federn eines die Torsionsfederung bewirkenden, nicht näher dargestellten Torsionsschwingungsdämpfers der Kupplungsscheibe.

Der Belagträger 1 ist aus mehreren in Umfangsrichtung hintereinander angeordneten, jeweils für sich als Blechstanzteil ausgebildeten Segmenten 17 zusammengesetzt. Jedes der Segmente 17 hat, wie am besten die den Zustand des Segments 17 vor dem Zusammenbau darstellende Figur 3 zeigt, einen bogenförmig konkav gekrümmten Anlagerand 19 mit dem es an einem zur Drehachse 3 zentrischen, am Außenumfang des Verstärkungsteils 5 vorgesehenen Zentrierrand 21 anliegt. Die Segmente 17 sind entlang des Anlagerands 19 mit einer zur Drehachse 3 konzentrischen Schweißnaht 23 im Bereich des Zentrierrands 21 an dem Verstärkungsteil 5 angeschweißt ist. Der Zentrierrand 21 umschließt, wie die Figuren 1 und 2 zeigen, dem Bereich der Fenster 13 radial außen. Er erstreckt sich, wie Figur 2 zeigt, nur über einen Teil der axialen Dicke des Verstärkungsteils 5 und geht in einem kurzen nach radial außen abstehenden Ringflansch 25 über, der die axiale Positionierung der Segmente 17 relativ zum Verstärkungsteil 5 in nachfolgend noch näher erläuterter Weise erleichtert, gegebenenfalls aber entfallen kann. Das Verstärkungsteil 5 ist dicker als die Segmente 17, um im Anlagebereich der Federn 15 eventuellen Verschleiß zu mindern.

Wie am besten Figur 3 zeigt, handelt es sich bei den Segmenten 17 um in Umfangsrichtung spiegelgelsymmetrische und damit in frei wählbare Orientierung einbaubare Blech-Stanzteile mit an den bogenförmigen Anlagerand 19 unmittelbar anschließenden radialen Rändern 27, die sich im vorliegenden Ausführungsbeispiel lediglich über einen Teil der radialen Abmessungen des Segments 17 erstrecken. Die äußeren Konturen der zum Belagträger 1 vereinigten Segmente 17 sind sämtlich gleich und der Abstand der beiden radialen Ränder 27 jedes Segments 17 ist so gewählt, daß benachbarte radiale Ränder 27 benachbarter Segmente 17 im wesentlichen spielfrei aneinandergrenzen, wenn die Segmente mit ihren Anlagererändern 19 an dem Zentrierrand 21 anliegen. Wie Figur 1 zeigt, sind die aneinanderangrenzenden radialen Ränder durch radiale Schweißnähte 29 miteinander verbunden, was die mechanische Festigkeit der Mitnehmerscheibe erhöht.

Bei der Herstellung der Mitnehmerscheibe werden die Segmente 17 zunächst entsprechend Figur 3 ohne die zur Befestigung der Reibbeläge 9 bestimmten Löcher 11 z. B. aus einem Blechstreifen gestanzt, was mit vergleichsweise geringem Stanzabfall möglich ist. Die Anforderungen an die Formgenauigkeit des Anlagerands 19 können relativ gering sein. Das Verstärkungsteil 5 und eine die Ringform des Belagträgers 1 komplettierende Anzahl Segmente 17 werden dann gemeinsam in eine Montagelehre bzw. Montageform eingelegt, die bei 31 strichpunktiert in Figur 1 angedeutet ist. Die Montagelehre 31 fixiert die an dem Flansch 25 des Verstärkungsteils 5 axial anliegenden Segmente 17 mit zugleich an dem Zentrierrand 21 anliegendem Anlagerand 23. Im fixierten Zustand werden die Segmente 17 unter Bildung der Schweißnähte 23, 29 an dem Verstärkungsteil 5 angeschweißt. Nach dem Schweißvorgang werden die für die Befestigung der Reibbeläge 9 in dem Belagträger 1 benötigten Öffnungen 11 eingearbeitet, beispielsweise eingestanzt oder eingebohrt. Wenngleich der Anlagerand 19 der Segmete 17 und der Zentrierrand 21 des Verstärkungsteils 5 gleichen Radius R haben, können toleranzbedingte Abweichungen der Radien nicht ausgeschlossen werden. Dadurch, daß die Öffnungen 11 erst nach dem Schweißvorgang in den Belagträger 1 eingearbeitet werden, können die Toleranzen des radialen Abstands der Öffnungen 11 von der Drehachse 3 mit einfachen Mitteln kleiner gehalten werden, als die Toleranzabweichung des Anlagerands 19 von dem durch den Zentrierrand 21 festgelegten Radius R. Aufgrund der gröberen Toleranzen im Bereich des Anlagerands 19 können geringe radiale Positionsschwankungen der einzelnen Segmente 17 ausgeglichen werden, wenn, wie erläutert, die Öffnungen 11 nachträglich angebracht werden. Es versteht sich, daß auch die in den Figuren 1 und 3 dargestellten, der Gewichtseinsparung dienenden Öffnungen 7 nach dem Schweißvorgang eingebracht werden können, was die Unwucht der Mitnehmerscheibe mindert. Soweit ein Auswuchtvorgang erforderlich ist, wird auch dieser vorteilhafter Weise nach dem Schweißvorgang durchgeführt.

Der in Figur 2 dargestellte, als Axialanschlag dienende Flansch 25 kann, wie bereits erwähnt, auch entfallen, da die Segmente 17 und das Verstärkungsteil 5 in der Montagelehre 31 gegebenenfalls auch axial zueinander ausgerichtet und für den Schweißvorgang fixiert werden können. Die radialen Kanten 27 und dementsprechend die zur Stabilitätserhöhung der Mitnehmerscheibe eingebrachten, radialen Schweißnähte 29 können, ausgehend von dem Anlagerand 19, gegebenfalls auch über die gesamte radiale Erstreckung der Segmente 17 verlaufen.

## Patentansprüche

1. Mitnehmerscheibe für eine torsionsgefederte Kupplungsscheibe einer Kraftfahrzeug-Reibungskupplung, umfassend: einen um eine Drehachse (3) herum angeordneten, im wesentlichen ringscheibenförmigen Belagträger (1) zur Anbringung von Reibbelägen (9) und ein zur Drehachse (3) zentrisches, im wesentlichen ringscheibenförmiges Verstärkungsteil (5) mit mehreren in Umfangsrichtung verteilten Fenstern (13) zur Aufnahme von Federn (15) einer Torsionsfederung, wobei das Verstärkungsteil (5) radial außerhalb des Bereichs der Fenster (13) einen Zentrierrand (21) mit Kreiskontur hat und der Belagträger (1) einen der Kreiskontur des Zentrierrands (21) im wesentlichen folgenden, radial inneren Rand (19) aufweist, entlang dem er an dem Verstärkungsteil (5) angeschweißt ist,
**dadurch gekennzeichnet**, daß
der Belagträger (1) aus mehreren, als gesonderte Blechstanzteile ausgebildeten Segmenten (17) zusammengesetzt ist, von denen sich jedes in Umfangsrichtung lediglich über einen Teil des Zentrierrands (21) erstreckt und einen zumindest angenähert dem Radius (R) des Zentrierrands (21) entsprechend bogenförmig konkav gekrümmten Anlagerand (19) für die Zentrierung an dem Zentrierrand (21) des Verstärkungsteils (5) aufweist,
und daß die Segmente (17) in Umfangsrichtung hintereinander angeordnet, jeweils für sich an dem Zentrierrand (21) anliegen und entlang diesem mit dem Verstärkungsteil (5) verschweißt sind.

2. Mitnehmerscheibe nach Anspruch 1, dadurch gekennzeichnet, daß jedes Segment (17) in Umfangsrichtung durch radial verlaufende, zumindest über einen Teil der radialen Abmessung des Segments (17) sich erstreckende Ränder (27) begrenzt ist, deren Abstand in Umfangsrichtung so gewählt ist, daß die sich zu dem Belagträger (1) ergänzenden Segmente (17) eine in Umfangsrichtung geschlossenen Ringscheibe bilden,
und daß die Segmente (17) entlang benachbarter radialer Ränder (27) miteinander verschweißt sind.

3. Mitnehmerscheibe nach Anspruch 2, dadurch gekennzeichnet, daß die radialen Ränder (27) jedes Segments (17) im wesentlichen unmittelbar an den bogenförmigen Anlagerand (19) anschließen.

4. Mitnehmerscheibe nach einem der Ansprüche 1 bis 3, dadurch gekennzeichnet, daß sämtliche sich zu dem Belagträger (1) ergänzenden Segmente (17) gleiche Außenkontur haben.

5. Mitnehmerscheibe nach einem der Ansprüche 1 bis 4, dadurch gekennzeichnet, daß die Segmente (17) in Umfangsrichtung spiegelsymmetrisch sind.

6. Mitnehmerscheibe nach einem der Ansprüche 1 bis 5, dadurch gekennzeichnet, daß die Segmente (17) Öffnungen, insbesondere Öffnungen (11) für die Anbringung der Reibbeläge (9) enthalten und daß die Toleranzen der Abstände der Öffnungen (7, 11) von der Drehachse (3) kleiner bemessen sind als die Toleranz, mit der der bogenförmige Anlagerand (19) jedes Segments (17) dem Radius (R) des Zentrierrands (21) des Verstärkungsteils (5) folgt.

7. Verfahren zum Herstellen einer Mitnehmerscheibe für eine torsionsgefederte Kupplungsscheibe einer Kraftfahrzeug-Reibungskupplung, wobei die Mitnehmerscheibe einen um eine Drehachse (3) herum angeordneten, im wesentlichen ringscheibenförmigen Belagträger (1) zur Anbringung von Reibbelägen (9) und ein zur Drehachse (3) zentrisches, im wesentlichen ringscheibenförmiges Verstärkungsteil (5) mit mehrerer in Umfangsrichtung verteilten Fenstern (13) zur Aufnahme von Federn (15) der Torsionsfederung umfaßt und der Belagträger (1) an einen radial außerhalb des Bereichs der Fenster (13) angeordneten Zentrierrand (21) des Verstärkungsteils (5) nach radial außen hin anschließt und im Bereich des Zentrierrands (21) an dem Verstärkungsteil (5) angeschweißt ist, gekennzeichnet durch die Verfahrensschritte:
a) Stanzen voneinander gesonderter, durch Aneinanderreihen zu dem Belagträger (1) ergänzbarer Segmente (17) aus Blech, wobei jedes Segment (17) einen zumindest angenähert dem Radius (R) des Zentrierrands (21) des Verstärkungsteils (5) entsprechend bogenförmig konkav gekrümmten Anlagerand (19) für die Zentrierung an dem Zentrierrand (21) aufweist,
b) Fixieren des Verstärkungsteils (5) und einer für die Ergänzung zum Belagträger erforderlichen Anzahl an Segmenten (17) in einer Montagelehre (31) in der Weise, daß ein jedes der Segmente (17) mit seinem bogenförmigen Anlagerand (19) am Zentrierrand (21) anliegt, und
c) Verschweißen der in Schritt b) fixierten Segmente (17) entlang ihrer Anlageränder (19) mit dem Verstärkungsteil (5) im Bereich des Zentrierrandes (21).

8. Verfahren nach Anspruch 7, dadurch gekennzeichnet, daß jedes Segment (17) im Schritt a) mit einer Kontur gestanzt wird, die zumindest nahe des bogenförmigen Anlagerands (19) radial verlaufende Ränder (27) in Umfangsrichtung in einem Abstand voneinander hat, der es erlaubt, die Segmente (17) in Schritt b) in Umfangsrichtung im wesentlichen spielfrei aneinander angrenzen zu lassen, und daß die Segmente (17) im Schritt c) auch im Bereich der radialen Ränder (27) miteinander verschweißt werden.

9. Verfahren nach Anspruch 7 oder 8, dadurch gekennzeichnet, daß nach dem Verschweißen gemäß Schritt c) in den Segmenten (17) Öffnungen (7, 11), zumindest jedoch Öffnungen (11) zur Befestigung der Reibbeläge (9) eingearbeitet werden.

## Claims

1. Driver plate for a torsion-sprung clutch disk of a vehicle friction clutch, comprising: a substantially annular disk-shaped lining support (1) disposed about an axis of rotation (3) for supporting friction linings (9) and a substantially annular disk-shaped reinforcement part (5) which is centred in relation to the axis of rotation (3) with a plurality of windows (13) distributed in circumferential direction to receive springs (15) of a torsion spring system, the reinforcement part (5) having a centring edge (21) of circular shape radially outside of the area of the windows (13), and the lining support (1) having a radially inner edge (19) which substantially conforms to the circular shape of the centring edge (21) along which it is welded to the reinforcement part, characterised in that
the lining support (1) comprises a plurality of segments (17) formed as individual stamped sheet-metal parts, each of which parts extends over only a portion of the centring edge (21) in circumferential direction, and each segment having a contact edge (19) for centring the reinforcement part (5) which is concavely shaped in the form of an arc and at least approximately conforms to the radius (R) of the centring edge (21); and the segments (17) are disposed adjacent to one another in the circumferential direction and respectively rest on the centring edge (21) and are welded individually along the latter with the reinforcement part (5).

2. Driven plate according to Claim 1, characterised in that each segment (17) is bordered in circumferential direction by edges (27) extending radially over at least a portion of the radial dimensions of the segments (17), the circumferential distance between said radially extending edges being such that the segments (17) forming the lining support (1) together form an annular disk that is substantially closed in the circumferential direction, and in that the segments (17) are welded together along adjoining radial edges (27).

3. Driven plate according to Claim 2, characterised in that the radially extending edges (27) of each segment (17) essentially follow the arc-shaped contact edge (19) directly.

4. Driven plate according to one of Claims 1 to 3, characterised in that all segments (17) which form the lining support (1) have the same exterior contours.

5. Driven plate according to one of Claims 1 to 4, characterised in that the segments (17) are mirror-symmetrical in the circumferential direction.

6. Driven plate according to one of Claims 1 to 5, characterised in that the segments (17) have openings, in particular openings (11) for the attachment thereto of friction linings (9), and the tolerances of the distances of the openings (7, 11) from the axis of rotation (3) are less than the tolerance with which the arc-shaped contact edge (19) of each segment (17) conforms to the radius (R) of the centring edge (21) of the reinforcement part (5).

7. Method for producing a driven plate for a torsion-suspended clutch disk of a motor vehicle friction clutch, wherein the driven plate comprises a substantially annular disk-shaped lining support (1) disposed around an axis of rotation (3) for supporting friction linings (9) and a substantially annular disk-shaped reinforcement part (5) which is centred in relation to the axis of rotation (3) with a plurality of windows (13) distributed in the circumferential direction to receive springs (15) of a torsion spring system, and the lining support (1) connects radially outwards with a centring edge (21) of the reinforcement part (5) arranged radially outside the region of the windows (13) and is welded to the reinforcement part (5) in the region of the centring edge (21), characterised by the steps:
(a) stamping segments (17) of sheet-metal which are separated from each other and can be combined into the lining support (1) by lining them up against each other in circumferentially adjacent relation, wherein each segment (17) has a contact edge (19) which is concavely shaped in the form of an arc corresponding at least approximately to the radius (R) of the centring edge (21) of the reinforcement part (5), for centring of the segment on the centring edge (21);
(b) fixing the reinforcement part (5) and the number of segments (17) required for combining into the lining support in an assembly jig (31) in such a way that one of each segment (17) with its arc-shaped contact edge (19) rests against the centring edge (21); and
(c) welding the fixed segments (17) fixed in step (b) along their contact edges (19) with the reinforcement part (5) in the region of the centring edge (21).

8. Method according to claim 7, characterised in that in step (a) each segment (17) is stamped with a contour which, at least in the vicinity of the arc-shaped contact edge (19), has radially extending edges (27) in the circumferential direction at a distance from each other which permits, in step (b), the segments (17) to adjoin circumferentially in a manner substantially free of play in the circumferential direction, and in step (c) the segments (17) are also welded together in the region of the radial edges (27).

9. Method according to Claim 7 or 8, characterised in that following welding in accordance with step (c), openings (7, 11) are cut into the segments (17) at least openings (11) for the attachment of friction linings (9) thereto.

## Revendications

1. Disque d'entraînement destiné à un disque d'embrayage, pourvu de ressorts de torsion, d'un embrayage à friction d'un véhicule automobile, comprenant : un support de garnitures (1) sensiblement en forme de disque annulaire, monté autour d'un axe de rotation (3), destiné à recevoir des garnitures de friction (9) et une partie de renforcement (5), centrée par rapport à l'axe de rotation (3), sensiblement en forme de disque annulaire, pourvue de plusieurs fenêtres (13), réparties dans le sens de la circonférence, destinées à loger des ressorts (15) d'un système amortisseur de torsion, la partie de renforcement (5), radialement à l'extérieur de la zone des fenêtres (13), possédant un bord de centrage (21) de contour circulaire et le support de garnitures (1) présentant un bord (19) radialement intérieur, suivant sensiblement le contour circulaire du bord de centrage (21), le long duquel il est soudé sur la partie de renforcement (5),
**caractérisé en ce que** le support de garnitures (1) est constitué d'un assemblage de plusieurs segments (17) conformés en parties de tôle découpées, dont chacun ne s'étend, dans le sens de la circonférence, que sur une partie du bord de centrage (21) et présente un bord d'appui (19), incurvé de façon concave selon une forme d'arc, d'une façon qui correspond au moins approximativement au rayon (R) du bord de centrage (21), pour le centrage sur le bord de centrage (21) de la partie de renforcement (5), et en ce que les segments (17) sont disposés les uns derrière les autres dans le sens de la circonférence, reposent chacun sur le bord de centrage (21) et sont soudés, le long de celui-ci, avec la partie de renforcement (5).

2. Disque d'entraînement selon la revendication 1, caractérisé en ce que chaque segment (17) est limité, dans le sens de la circonférence, par des bords radiaux (27) s'étendant au moins sur une partie de la dimension radiale du segment (17), dont l'espacement est choisi de telle sorte que les segments (17) constituant le support de garnitures (1) forment un disque annulaire fermé dans le sens de la circonférence, et en ce que les segments (17) sont soudés les uns aux autres le long de bords radiaux (27) voisins.

3. Disque d'entraînement selon la revendication 2, caractérisé en ce que les bords radiaux (27) de chaque segment (17) font suite de façon sensiblement immédiate au bord d'appui (19) en forme d'arc.

4. Disque d'entraînement selon l'une des revendications 1 à 3, caractérisé en ce que tous les segments (17) constituant le support de garnitures (1) présentent un contour extérieur identique.

5. Disque d'entraînement selon l'une des revendications 1 à 4, caractérisé en ce que les segments (17) sont symétriques dans le sens de la circonférence.

6. Disque d'entraînement selon l'une des revendications 1 à 5, caractérisé en ce que les segments (17) présentent des ouvertures, en particulier des ouvertures (11) destinées à recevoir les garnitures de friction (9) et en ce que les tolérances des écarts entre les ouvertures (7, 11) et l'axe de rotation (3) sont inférieures à la tolérance selon laquelle le bord d'appui (19) en forme d'arc de chaque segment (17) suit le rayon (R) du bord de centrage (21) de la partie de renforcement (5).

7. Procédé de fabrication d'un disque d'entraînement destiné à un disque d'embrayage, pourvu de ressorts de torsion, d'un embrayage à friction d'un véhicule automobile, le disque d'entraînement comprenant un support de garnitures (1) sensiblement en forme de disque annulaire, monté autour d'un axe de rotation (3), destiné à recevoir des garnitures de friction (9) et une partie de renforcement (5), centrée par rapport à l'axe de rotation (3), sensiblement en forme de disque annulaire, pourvue de plusieurs fenêtres (13), réparties dans le sens de la circonférence, destinées à loger des ressorts (15) d'un système amortisseur de torsion, et le support de garnitures (1) faisant suite, radialement vers l'extérieur, à un bord de centrage (21) de la partie de renforcement (5) situé radialement à l'extérieur de la zone des fenêtres (13) et étant soudé dans la zone du bord de centrage (21) sur la partie de renforcement (5), caractérisé par les étapes suivantes :
a) découpe de segments de tôle (17) séparés les uns des autres, constituant le support de garnitures (1) par disposition côte à côte, chaque segment (17) présentant un bord d'appui (19), incurvé de façon concave selon une forme d'arc, d'une façon qui correspond au moins approximativement au rayon (R) du bord de centrage (21) de la partie de renforcement (5), pour le centrage sur le bord de centrage (21),
b) fixation de la partie de renforcement (5) et d'un nombre de segments (17) nécessaire pour constituer le support de garnitures, dans un gabarit de montage (31) de telle sorte que chacun des segments (17) repose, par son bord d'appui (19) en forme d'arc, sur le bord de centrage (21), et
c) soudage des segments (17) fixés au cours de l'étape b) le long de leurs bords d'appui (19) avec la partie de renforcement (5) dans la zone du bord de centrage (21).

8. Procédé selon la revendication 7, caractérisé en ce que chaque segment (17) est découpé au cours de l'étape a) selon un contour qui, au moins à proximité du bord d'appui (19) en forme d'arc, présente des bords (27) s'étendant radialement dont l'espacement, dans le sens de la circonférence, est tel qu'il permet aux segments (17), au cours de l'étape b), d'être placés bout à bout, dans le sens de la circonférence, sensiblement sans jeu, et en ce que les segments (17), au cours de l'étape c), sont soudés les uns aux autres également dans la zone des bords radiaux (27).

9. Procédé selon la revendication 7 ou 8, caractérisé en ce qu'après le soudage pratiqué au cours de l'étape c), des ouvertures (7, 11) sont ménagées dans les segments (17), comprenant des ouvertures (11) destinées à la fixation des garnitures de friction (9).
